# EUROPÄISCHE PATENTSCHRIFT

(11) **EP 0 618 003 B1**
(45) Veröffentlichungstag und Bekanntmachung des Hinweises auf die Patenterteilung: **07.01.1999**
(21) Anmeldenummer: 93810218.3
(22) Anmeldetag: 25.03.1993
(51) Int. Cl.: B01J 19/32, B01D 9/00, B01D 53/14, B01J 10/02, B01J 15/00, B01J 16/00, C12M 1/40

(54) **Als Wärmeübertrager ausgebildetes Packungselement für Stoffaustausch- oder Stoffumwandlungs-Verfahren**
Packing element for mass exchange or mass conversion in the form of a heat-exchanging element
Elément de remplissage destiné à l'échange ou à la transformation de matière sous la forme d'un élément d'échange de chaleur

(43) Veröffentlichungstag der Anmeldung: 05.10.1994
(73) Patentinhaber: Sulzer Chemtech AG, CH-8404 Winterthur (CH)
(72) Erfinder: Schwald, Günther, W-8000 München 21 (DE)
(74) Vertreter: Heubeck, Bernhard

(56) Entgegenhaltungen:
- EP-A- 0 428 265
- DE-C- 826 445
- FR-A- 2 115 348
- FR-A- 2 318 398
- GB-A- 2 047 313
- US-A- 3 216 495
- US-A- 3 364 992
- US-A- 4 699 209

## Beschreibung

Die Erfindung bezieht sich auf ein als Wärmeübertrager ausgebildetes Packungselement für Stoffaustausch- oder Stoffumwandlungs-Verfahren gemäss Oberbegriff von Anspruch 1. Die Erfindung betrifft auch Verwendungen von Packungen mit derartigen Packungselementen.

In der EP-A 0 391 846 ist ein Biofliessreaktor mit einer Wärmeübertrager-Vorrichtung offenbart, die den Aufbau einer Packung aufweist, wie sie beispielsweise von Stoffaustauschkolonnen oder statischen Mischern her bekannt ist: Eine solche Packung setzt sich aus Schichten von wellenförmig oder zickzackartig gefalteten Lamellen zusammen, wobei die Profilierung der Lamellen offene und sich kreuzende Kanäle ergibt. Eine Schicht der bekannten Wärmeübertrager-Vorrichtung wird durch zwei gleiche, in einem gleichmässigen Abstand angeordneten Lamellen gebildet. Der Hohlraum zwischen den beiden Lamellen ist für die Führung eines Wärmeträgermediums bestimmt.

Aus der DE-C 826 445 ist ein Wärmeaustauscher bekannt, der zwei wellenförmig profilierte Schalen umfasst, die einen Innenraum mit sich offen kreuzenden Kanälen bilden.

Bei Stoffaustausch- oder Stoffumwandlungs-Kolonnen ist es anscheinend nicht bekannt, Packungselemente als Wärmeübertrager auszubilden. Beispielsweise wird bei einem katalytischen Reaktor (EP-A-0 433 222), bei dem der Katalysatorkörper als Packung in Form eines statischen Mischers ausgebildet ist, der Stoffstrom solcherart in der Packung geführt, dass in vorteilhafter Weise eine Wärmeableitung an der Reaktorwandung erfolgt.

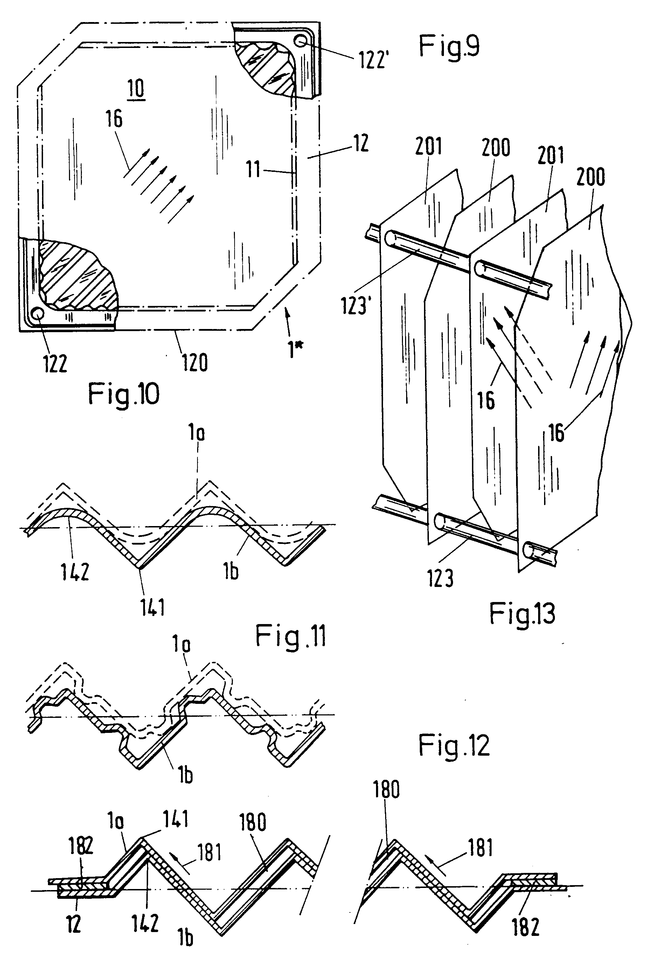

Bekannt ist (siehe G.Kaibel, "Energieintegration in der thermischen Verfahrenstechnik", Chem.-Ing..Tech. 62, p.99-106, insbesondere Abb.13), dass beispielsweise bei der Auftrennung eines Stoffgemisches (Methanol/Wasser) durch eine Zwischenverdampfung Exergieverluste verringert werden können. Es ist vorgesehen, diese Zwischenverdampfung ausserhalb der Kolonne vorzunehmen. Vorteilhafter wäre allerdings, wenn dieser Prozessschritt mittels einer als Wärmeübertrager ausgebildeten Packung durchgeführt würde.

Bei der Packung, wie sie für den oben genannten Biofliessreaktor vorgeschlagen worden ist, bestehen verschiedene Schwierigkeiten: Die beiden Seitenflächen in Form von gewellten Folien oder Blechen machen eine aufwendige Konstruktion bezüglich Verteil- und Sammelkanälen für das Wärmeträgermedium nötig. Da die Seitenflächen einen gleichmässigen Abstand aufweisen, ist eine kontrollierte Führung des Wärmeträgermediums praktisch nicht möglich. Ferner sind keine Massnahmen vorgesehen, die einen Überdruck des Wärmeträgermediums zulassen. Es ist daher Aufgabe der Erfindung, ein Packungselement der eingangs genannten Art zu schaffen, bei dem die vorstehend aufgezählten Schwierigkeiten behoben sind. Diese Aufgabe ist durch die im kennzeichnenden Teil des Anspruchs 1 aufgeführten Merkmale lösbar.

Das erfindungsgemässe Packungselement ist ausser für Trennprozesse und für Katalyse oder andere Stoffumwandlungsprozesse auch mit Vorteil für Sorptionsprozesse verwendbar, die mit einem relativ grossen Energieumsatz verbunden sind. Eine weitere Verwendungsmöglichkeit besteht für die Stofftrennung mittels gerichteter Kristallisation. Bei diesem Verfahren, das aus der CH-PS 501 421 bekannt ist, wird eine Schmelze durch Erstarrung und periodisches Aufschmelzen der in Wärmeübertragerrohren angelagerten Kristallschichten gereinigt.

Die abhängigen Ansprüche 2 bis 7 betreffen vorteilhafte Ausführungsformen des erfindungsgemässen Packungselements. Die wärmeübertragenden Körper dieser Packungselemente werden durch Prägen von Metallfolien gefertigt. Die Ansprüche 8 bis 12 beziehen sich auf Verfahren, bei denen solche Packungselemente mit Vorteil anwendbar sind.

Die Erfindung wird anhand von Zeichnungen erläutert. Es zeigen:
- Fig. 1: einen wärmeübertragenden Körper des erfindungsgemässen Packungselements in Seitenansicht,
- Fig. 2: die zweite Seite des Körpers von Fig.1,
- Fig. 3: ein ausgeschnittenes Stück einer Schale desselben Körpers in perspektivischer Ansicht,
- Fig. 4: einen Schnitt nach Linie IV - IV in Fig.1,
- Fig. 5: drei Teilbilder für die Erläuterung der Bezeichnung "inverse Spiegelung", in Bezug auf den Schalen-Binnenbereich einer ersten Ausführungsform,
- Fig. 6: ausschnittsweise einen Querschnitt durch den Binnenbereich der ersten Ausführungsform,
- Fig. 7: die "inverse Spiegelung" für eine zweite Ausführungsform,
- Fig. 8: einen der Fig.6 entsprechenden Querschnitt für die zweite Ausführungsform
- Fig. 9: die Seitenansicht einer besonderen Ausführungform, bei der die beiden Seiten des wärmeübertragenden Körpers gleich geformt sind,
- Fig. 10: eine variante Ausführungsform zu jener der Fig.6,
- Fig. 11: eine weitere Ausführungsform,
- Fig. 12: ein Schalenpaar, bei dem die Querschnittsfläche der Wärmeübertragerkanäle veränderbar ist,
- Fig. 13: eine Darstellung der Parallelschaltung von vier benachbarten wärmeübertragenden Körpern,

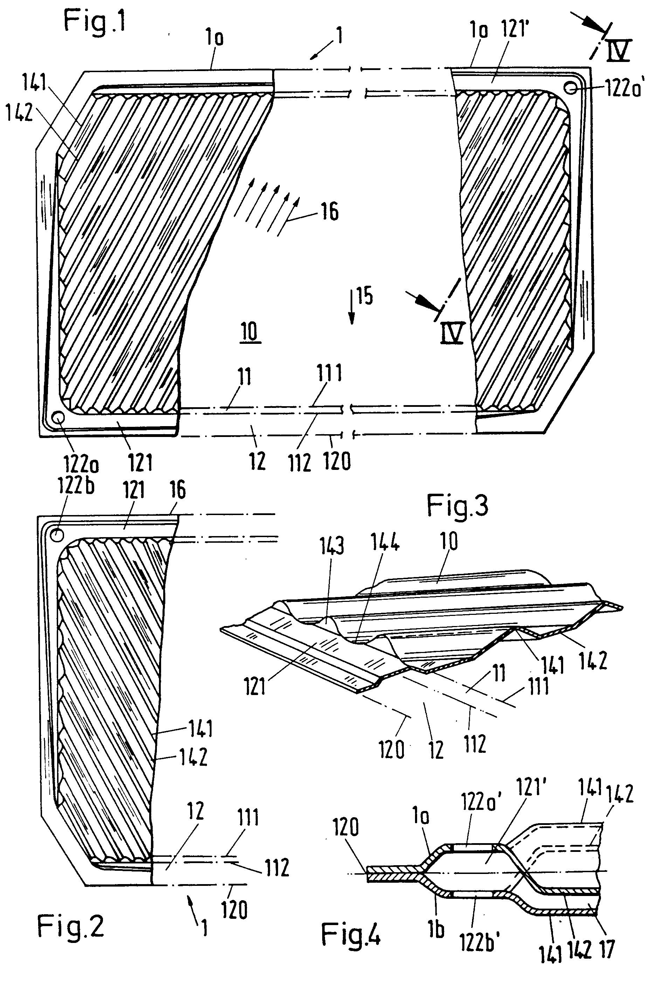

Die Schale 1a des wärmeübertragenden Körpers 1 in Fig.1 weist einen wellenförmig profilierten Binnenbereich 10, eine Randzone 12 sowie eine Übergangszone 11 auf. Die Grenzen dieser Zonen sind durch die strichpunktiert gezeichneten Linien 111, 112 und 120 dargestellt; die Linie 120 ist gleichzeitig der Schalenrand. Unter der Bezeichnung "wellenförmig" in Bezug auf das Profil des Binnenbereichs 10 wird hier und nachfolgend (sowie in den Ansprüchen) auch "zickzack-", "trapez-" und "sägezahnförmig" verstanden.

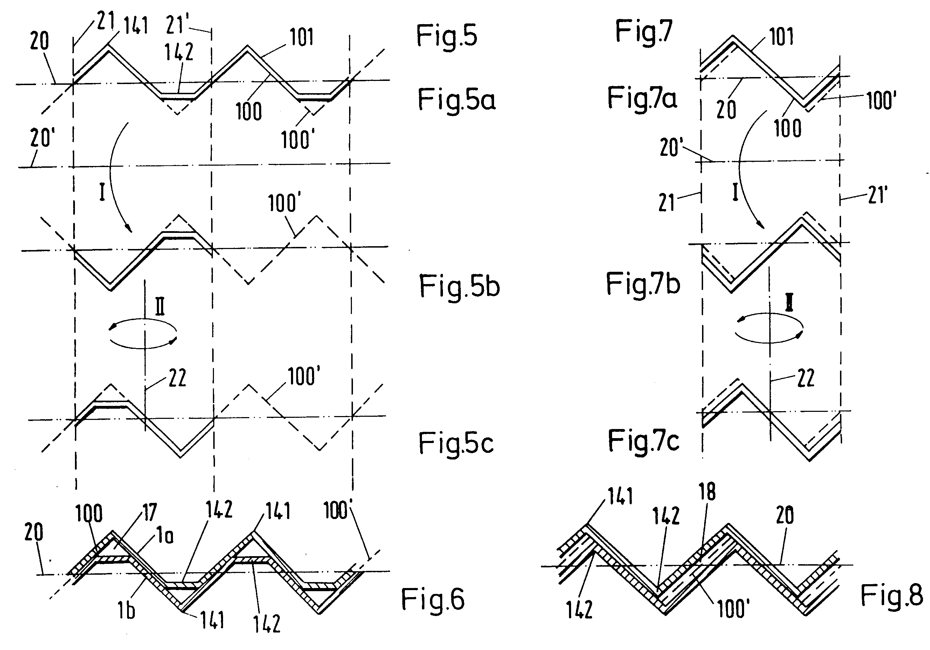

Durch die Kämme 141 und Talsohlen 142 des Profils werden - wie in Fig.6 zu sehen ist - die Wärmeübertragerkanäle 17 gebildet; der diesen Kanälen 17 entsprechende Fluss des Wärmeträgermittels ist in Fig.1 durch die Pfeile 16 angedeutet. Mit dem Pfeil 15 ist die Hauptrichtung eines zwischen den Körpern 1 fliessenden Stoffstroms bezeichnet. Die Stoffstrom-Hauptrichtung 15 wie auch die Fliessrichtung 16 des Wärmeträgermittels können selbstverständlich auch umgekehrt orientiert sein. Die Binnenbereiche 10 sind sägezahnartig profiliert und zwar derart, dass die Sohlen 142 der Wellentäler eben ausgebildet sind und somit die Querschnitte der Wärmeübertragerkanäle 17 eine dreieckige Form erhalten.

Wie die Fig.3 zeigt, werden in der Übergangszone 11 die wellenförmigen Erhebungen 141 und Vertiefungen 142 des Binnenbereichs 10 durch aufsteigende Randstücke 143 bzw. abfallende Randstücke 144 abgeschlossen. Im Randbereich 12 befindet sich der Verteilkanal 121 des Wärmeträgermittels bzw. der Sammelkanal 121' (siehe Fig.1). Für die Zuführung bzw. Abführung des Wärmeträgermittels sind Öffnungen 122a und 122a' vorgesehen.

Der Körper 1 wird durch ein Schalenpaar 1a, 1b gebildet. Die zweite Hälfte 1b des Schalenpaars der Fig.1 ist ausschnittsweise in Fig.2 dargestellt (wobei um die untere Kante in die Ebene der Schale 1a gedreht worden ist). Die Randzonen 12 des Schalenpaars sind zueinander spiegelbildlich ausgebildet, und die Binnenbereiche 10 sind in Form eines "inversen Spiegelbildes" derart ausgebildet, dass sich eine Verzahnung zwischen den beiden Schalen ergibt. (Die Erläuterung der Bezeichnung "inverses Spiegelbild" wird nachstehend anhand der Fig.5 gegeben.) Es ist eine zweite Öffnung 122b für die Zuführung des Wärmeträgermittels vorgesehen. Fig.4 zeigt einen Querschnitt durch das Schalenpaar 1a, 1b und zwar durch die Öffnungen 122a' und 122b', die für die Abführung des Wärmeträgermittels vorgesehen sind. Die Öffnungen 122a' und 122b' bzw. 122a und 122b, die hier in einer Ecke angeordnet sind, können stattdessen auch an einer anderen Stelle der Randzone 12 angeordnet werden.

Fig.5a zeigt ausschnittsweise die innere Kontur 100 des Binnenbereichs 10 der Schale 1a sowie deren äussere Kontur 101, wobei die Schale 1a ein sägezahnförmiges Profil aufweist. Die Konturen für die Schale 1b erhält man durch zwei Transformationsschritte I und II. Der Schritt I ist eine Spiegelung an der Mittelebene 20. Aus Darstellungsgründen ist in Fig.5 die Spiegelung an einer zur Ebene 20 parallelen Ebene 20' vorgenommen worden. Das Ergebnis des Schritts I ist in Fig.5b abgebildet. Beim Schritt II wird das Profil segmentweise um Achsen 22, die senkrecht zur Mittelebene 20 stehen, jeweils um 180° gedreht (oder an einer Ebene durch die Achse 22 gespiegelt). Dabei ist das Profilsegment mit dem periodisch auftretenden Wellenelement identisch, das durch die beiden Linien 21 und 21' begrenzt ist; die Achse 22 verläuft durch den Mittelpunkt des Profilsegments. Das Resultat des Schritts II ist in Fig.5c dargestellt. Die zentrale Linie 100' kommt auf die ursprüngliche Linie 100' der Fig.5a zu liegen. Die durch die kombinierten Schritte I und II gegebene Transformation wird hier mit "inverser Spiegelung" bezeichnet.

Die Binnenbereiche der beiden Schalen 1a und 1b lassen sich gemäss Fig.6 ineinander verzahnen. An den Berührungsflächen der Innenkontur 100 können die beiden Schalen 1a und 1b beispielsweise durch Punktschweissung miteinander verbunden werden.

Die Figuren 7 und 8 geben eine den Figuren 5 und 6 entsprechende Darstellung der "inversen Spiegelung" für ein zweites Ausführungsbeispiel, bei dem das Profil zickzackförmig ist. Dabei entsteht jeweils anstelle zweier dreieckiger Kanäle 17 ein rechteckiger Kanal 18.

Fig.9 zeigt eine besonders symmetrische Variante 1* der ersten Ausführungsform, bei der die Kanalrichtung 16 in einem Winkel von 45° zu den Rändern 120 verläuft. Ist die Anzahl der Profilsegmente (bezüglich einem Diagonalschnitt senkrecht zur Richtung 16) ungerade, so weisen die beiden Schalen 1a und 1b die gleiche Form auf und können also mit der gleichen Prägeform gefertigt werden. Für die zweite Ausführungsform (Fig.8) gibt es entsprechend ebenfalls eine symmetrische Variante.

Fig.10 zeigt eine Variante des Profils der ersten Ausführungsform. Hier sind die Sohlen der Wellentäler gerundet statt eben ausgebildet. In Fig.11 ist ein komplexeres Schalenprofil des erfindungsgemässen Körpers 1 dargestellt, für welches die Innenseiten der Schalen 1a und 1b in hohem Masse mit dem Wärmeträgermittel in Kontakt gebracht werden können.

Das Profil der Fig.8 hat die Eigenschaft, dass die Querschnittsfläche der Kanäle 18 vergrössert werden können. Dazu - siehe Fig.12 - wird in der Randzone 12 ein Rahmenstück 182 eingelegt, wodurch die beiden Hälften des Schalenpaars 1a, 1b gemäss Pfeil 181 auseinander gerückt werden und die vergrösserten Kanäle 180 entstehen.

Fig.13 zeigt ausschnittsweise, wie vier wärmetauschende Körper eines erfindungsgemässen Packungselements, welche lediglich durch deren Mittelebenen 200 bzw. 201 angedeutet sind, ähnlich wie bei einem Plattenwärmeübertrager zusammengeschaltet werden. Die "Körper" 200 und 201 sind alternierend angeordnet und zwar solcherart, dass die Kanalrichtungen - durch die Pfeile 16 angegeben - sich kreuzen. Über die Leitung 123 erfolgt die Zuführung des Wärmeträgermittels in die "Körper" 200. Die zugeordneten Abführleitungen sind nicht dargestellt. Für die alternierend angeordneten "Körper" 201 gilt das umgekehrte; hier dient die Leitung 123' für das Abführen des Wärmeträgermittels. Durch das Zusammenschalten der wärmeübertragenden Körper zu einem erfindungsgemässen Packungselement entstehen zwischen den Körpern die Strömungskanäle (nicht dargestellt) in Form von offenen, sich kreuzenden Kanälen.

## Patentansprüche

1. Als Wärmeübertrager ausgebildetes Packungselement für Stoffaustausch- oder Stoffumwandlungsverfahren, eine Mehrzahl von parallel angeordneter Schichten umfassend, die längs einer Hauptrichtung (15) ausgerichtet und durch wärmeübertragende Körper (1) mit Hohlräumen (17) für ein Wärmeträgermedium gebildet sind, wobei diese Körper (1) aus folienartigem Werkstoff jeweils in Form eines Paars von Schalen (1a, 1b) gebildet sind, deren Seitenflächen jeweils einen wellenförmig profilierten Binnenbereich (10), eine Randzone (12) sowie eine Übergangszone (11) zwischen Binnenbereich und Randzone aufweisen, wobei Wärmeübertragerkanäle (17) im Binnenbereich und ein Verteil- sowie Sammelkanalsystem (121, 121') in der Randzone angeordnet sind, Wellenkämme (141) des Binnenbereichs gegen die Hauptrichtung (15) geneigt sind und wobei zwischen benachbarten, sich berührenden Schichten offene sowie sich kreuzende Strömungskanäle sich ergeben,
dadurch gekennzeichnet, dass die Binnenbereiche (10) in Form eines "inversen Spiegelbildes" derart ausgebildet sind, dass eine Verzahnung zwischen den beiden Schalen vorliegt, und auf der Innenseite des Schalenpaars entlang der Wärmeübertragerkanäle eine Vielzahl von Verbindungspunkten besteht.

2. Packungselement nach Anspruch 1, dadurch gekennzeichnet, dass die Verbindungspunkte durch Punktschweissung gebildet sind und eine gegen Überdruck des Wärmeträgermediums beständige Verbindung der beiden Schalen herstellen.

3. Packungselement nach Anspruch 1 oder 2, dadurch gekennzeichnet, dass der Werkstoff der Schalen (1a, 1b) aus einer metallischen Legierung besteht und dass die Profilierung durch Prägung erzeugt ist.

4. Packungselement nach einem der Ansprüche 1 bis 3, dadurch gekennzeichnet, dass die wärmeübertragenden Körper (1) mittels mindestens einer Zuführ- sowie Abführleitung (123, 123') für das Wärmeträgermedium zu einem Paket zusammengeschaltet sind.

5. Packungselement nach einem der Ansprüche 1 bis 4, dadurch gekennzeichnet, dass die Randzonen (12) des Schalenpaars (1a, 1b) zueinander spiegelbildlich ausgebildet sind.

6. Packungselement nach Anspruch 1, dadurch gekennzeichnet, dass die Binnenbereiche (10) sägezahnartig profiliert sind und zwar derart, dass die Sohlen (142) der Wellentäler eben oder gerundet ausgebildet sind und dass die Querschnitte der Wärmeübertragerkanäle (17) dreieckig sind.

7. Packungselement nach Anspruch 1, dadurch gekennzeichnet, dass die Binnenbereiche (10) zickzackartig profiliert sind und zwar derart, dass die Querschnitte der Wärmeübertragerkanäle (17) rechteckig sind.

8. Stoffaustauschverfahren in einer Kolonne mit mindestens einem Packungselement gemäss einem der Ansprüche 1 bis 7, dadurch gekennzeichnet, dass ein auf dem Packungselement fliessender Rieselfilm und ein gasförmiger Stoff im Gegenstrom geführt werden.

9. Stoffumwandlungsverfahren in einer Kolonne mit mindestens einem Packungselement gemäss einem der Ansprüche 1 bis 7, dadurch gekennzeichnet, dass eine Stoffumwandlung mit einem katalytischen Material durchgeführt wird, wobei die wärmeübertragenden Körper mit diesem Material beschichtet sind.

10. Sorptionsverfahren in einer Kolonne mit mindestens einem Packungselement gemäss einem der Ansprüche 1 bis 7, dadurch gekennzeichnet, dass ein auf dem Packungselement fliessender, Sorptionsmittel enthaltender Rieselfilm und ein gasförmiger Stoff im Gegenstrom geführt werden.

11. Stoffumwandlungsverfahren in einem Biofliessreaktor mit mindestens einem Packungselement gemäss einem der Ansprüche 1 bis 7, dadurch gekennzeichnet, dass Stoffumwandlungsprozesse mittels einer Suspension von Mikroorganismen in Strömungskanälen des Packungselements durchgeführt werden.

12. Verfahren zum Reinigen einer Schmelze in einem Apparat mit Packungselementen gemäss einem der Ansprüche 1 bis 7, dadurch gekennzeichnet, dass die Schmelze durch gerichtete Kristallisation in Strömungskanälen des Packungselements, nämlich durch periodisches Aufschmelzen von bei der Kristallisation gebildeten Kristallschichten, gereinigt wird.

## Claims

1. Packing element for processes for the exchange or conversion of materials, designed as a heat exchanger and comprising a number of parallel layers which are aligned along a principal direction (15) and are formed by heat-transferring units (1) with cavities (17) for a heat-transfer medium, wherein these units (1) are each formed from foil-like material in the form of a pair of shells (1a, 1b) in which the side faces each have a corrugated inner region (10), an edge zone (12) and a transition zone (11) between the inner region and the edge zone, wherein heat-transfer channels (17) are located in the inner region and a distribution and collection system of channels (121, 121') is located in the edge zone, the crests (141) of the corrugations in the inner region are inclined with respect to the principal direction (15) and wherein open and intersecting flow channels are provided between adjacent layers which are in contact,
characterised in that the inner region (10) is designed in the form of an "inverse mirror image" in such a way that the two shells can interlock and that there are a large number of connection points along the heat-transfer channels on the internal faces of the pair of shells.

2. Packing element according to Claim 1, characterised in that the connection points are formed by spot-welding and produce a connection between the two shells which can withstand the excess pressure of the heat-transfer medium.

3. Packing element according to Claim 1 or 2, characterised in that the material comprising the shells (1a, 1b) consists of a metallic alloy and that the profile is produced by impression moulding.

4. Packing element according to one of Claims 1 to 3, characterised in that the heat-transferring units (1) are interconnected to form a stack by means of at least one feed pipe and one drainage pipe (123, 123') for the heat-transfer medium.

5. Packing element according to one of Claims 1 to 4, characterised in that the edge zones (12) of the pair of shells (1a, 1b) are designed as mirror images of each other.

6. Packing element according to Claim 1, characterised in that the inner regions (10) are saw-tooth shaped, to be precise in such a way that the bottoms of the troughs are flat or rounded and the cross-sections of the heat-transfer channels (17) are triangular.

7. Packing element according to Claim 1, characterised in that the inner regions (10) are zig-zag shaped, to be precise in such a way that the cross-sections of the heat-transfer channels (17) are rectangular.

8. Process for the exchange of materials in a column with at least one packing element in accordance with one of Claims 1 to 7, characterised in that a trickle-film flowing over the packing element and a gaseous substance are passed in counterflow.

9. Process for the conversion of materials in a column with at least one packing element in accordance with one of Claims 1 to 7, characterised in that materials conversion is performed using a catalytic substance, wherein the heat-transferring unit is coated with this substance.

10. Sorption process in a column with at least one packing element in accordance with one of Claims 1 to 7, characterised in that a trickle-film containing a sorption agent flowing over the packing element and a gaseous substance are passed in counter flow.

11. Process for materials conversion in a biological flow reactor with at least one packing element in accordance with one of Claims 1 to 7, characterised in that materials conversion processes are performed using a suspension of microorganisms in the flow channels in the packing elements.

12. Process for purifying a molten material in an apparatus with packing elements in accordance with one of Claims 1 to 7, characterised in that the molten material is purified by directional crystallisation in the flow channels of the packing element, that is by periodic melting of the crystal layers formed during crystallisation.

## Revendications

1. Elément de garniture réalisé sous forme d'échangeur de chaleur pour un procédé d'échange ou de transformation de matière, comprenant une pluralité de couches disposées parallèlement qui sont orientées le long d'une direction principale (15) et qui sont formées par des corps (1) transférant la chaleur avec des espaces creux (17) pour un agent caloporteur, ces corps (1) étant formés en un matériau en forme de feuille respectivement sous la forme d'une paire de coques (1a, 1b) dont les surfaces latérales présentent respectivement une zone intérieure (10) profilée en forme d'ondes, une zone de bord (12) ainsi qu'une zone de transition (11) entre la zone intérieure et la zone de bord, où des canaux de transfert de chaleur (17) sont disposés dans la zone intérieure et un système de canaux de répartition et de collecte (121, 121') dans la zone de bord, où des crêtes d'ondes (141) de la zone intérieure sont inclinées contre la direction principale (15) et où sont obtenus entre des couches avoisinantes, qui viennent en contact, des canaux d'écoulement ouverts et qui se croisent,
caractérisé en ce que les zones intérieures (10) sont réalisées sous la forme d'une "image réfléchie inverse" de façon qu'il existe une denture entre les deux coques et qu'il y ait sur le côté intérieur de la paire de coques, le long des canaux de transfert de chaleur une multitude de points de liaison.

2. Elément de garniture selon la revendication 1, caractérisé en ce que les points de liaison sont formés par soudage par points et qu'ils établissent une liaison des deux coques résistant à une surpression de l'agent caloporteur.

3. Elément de garniture selon la revendication 1 ou 2, caractérisé en ce que le matériau des coques (1a, 1b) est constitué d'un alliage métallique et que le profilage est réalisé par estampage.

4. Elément de garniture selon l'une des revendications 1 à 3, caractérisé en ce que les corps transférant la chaleur (1) sont réunis en un paquet par au moins un conduit d'amenée et d'évacuation (123, 123') pour l'agent caloporteur.

5. Elément de garniture selon l'une des revendications 1 à 4, caractérisé en ce que les zones de bord (12) de la paire de coques (1a, 1b) sont réalisées d'une manière spéculairement identique.

6. Elément de garniture selon la revendication 1, caractérisé en ce que les zones intérieures (10) sont profilées en dents de scie et cela de façon que les fonds (142) des creux d'ondes soient plans ou arrondis et que les sections transversales des canaux de transfert de chaleur (17) soient triangulaires.

7. Elément de garniture selon la revendication 1, caractérisé en ce que les zones intérieures (10) sont profilées en zigzag et cela de façon que les sections transversales des canaux de transfert de chaleur (17) soient rectangulaires.

8. Procédé d'échange de matière dans une colonne avec au moins un élément de garniture selon l'une des revendications 1 à 7, caractérisé en ce qu'un film ruisselant s'écoulant sur l'élément de garniture et une matière gazeuse sont guidés en contre-courant.

9. Procédé de transformation de matière dans une colonne avec au moins un élément de garniture selon l'une des revendications 1 à 7, caractérisé en ce qu'il est effectué une transformation de matière avec un matériau catalytique où les corps transférant la chaleur sont revêtus de ce matériau.

10. Procédé de sorption dans une colonne avec au moins un élément de garniture selon l'une des revendications 1 à 7, caractérisé en ce qu'un fil ruisselant s'écoulant sur l'élément de garniture, contenant des moyens de sorption et une matière gazeuse sont guidés en contre-courant.

11. Procédé de transformation de matière dans un bioréacteur d'écoulement avec au moins un élément de garniture selon l'une des revendications 1 à 7, caractérisé en ce que des procédés de transformation de matière sont effectués au moyen d'une suspension de micro-organismes dans des canaux d'écoulement de l'élément de garniture.

12. Procédé pour nettoyer une masse fondue dans un appareil avec des éléments de garniture selon l'une des revendications 1 à 7, caractérisé en ce que la masse fondue est nettoyée par une cristallisation orientée dans des canaux d'écoulement de l'élément de garniture, à savoir par une fusion périodique de couches cristallines formées lors de la cristallisation.
